(19) Europäisches Patentamt
European Patent Office
Office européen des brevets

(11) Publication number: **0 388 971 A1**

# (12) EUROPEAN PATENT APPLICATION

(21) Application number: **90105539.2**

(22) Date of filing: **23.03.90**

(51) Int. Cl.5: **C08K 13/02, C08L 81/06, //(C08K13/02,3:40,5:54)**

The title of the invention has been amended (Guidelines for Examination in the EPO, A-III, 7.3).

(30) Priority: **23.03.89 US 327790**

(43) Date of publication of application: **26.09.90 Bulletin 90/39**

(84) Designated Contracting States: **AT BE CH DE ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Wright, Roy Franklin**
**2076 Southview**
**Bartlesville, OK 74003(US)**

(74) Representative: **Dost, Wolfgang, Dr. rer. nat. Dipl.-Chem. et al**
**Patent- u. Rechtsanwälte Bardehle, Pagenberg, Dost, Altenburg Frohwitter & Partner Galileiplatz 1**
**D-8000 München 80(DE)**

## (54) Glass filled aromatic sulfide/sulfone polymer compositions and methods of preparation.

(57) The present invention relates to glass-filled aromatic sulfide/sulfone polymer compositions which upon being molded result in products having improved mechanical properties. Methods of preparing the compositions, methods of producing molded products using the compositions and the molded products so produced are also provided. The compositions are comprised of thermoplastic resins selected from the group consisting of aromatic sulfide/sulfone polymers and mixtures of aromatic sulfide/sulfone polymers and arylene sulfide polymers; glass reinforcement materials; and epoxysilane.

EP 0 388 971 A1

# GLASS FILLED AROMATIC SULFIDE/SULFONE POLYMER COMPOSITIONS AND METHODS

## Background Of The Invention

### 1. Field Of The Invention

The present invention relates to glass filled aromatic sulfide/sulfone polymer compositions and methods of preparing and using such compositions to form molded products having improved mechanical properties.

### 2. Description of the Prior Art

Molded aromatic sulfide/sulfone polymer resin compositions are useful in many applications, especially those involving high temperatures such as electrical components, wire coatings, automotive parts and the like.

United States Patents Nos. 4,016,145 issued April 5, 1977 and 4,127,713 issued Nov. 28, 1978 disclose processes for the production of aromatic sulfide/sulfone polymer resin by reacting dihalo aromatic sulfone, selected alkali metal sulfide, organic amide, and alkali metal carboxylate reactants. Such resin can be blended with fillers including glass reinforcement material and mineral fillers, pigments, extenders, additives and the like.

Glass-filled compositions containing poly(phenylene sulfide/sulfone) resin have been developed and used heretofore. Such compositions are particularly suitable for forming parts and coatings for electrical components where high mechanical strength, impact resistance and electric insulation resistance are required.

By the present invention improved glass-filled aromatic sulfide/sulfone polymer compositions are provided which upon being molded have improved mechanical properties including flexural strength, impact resistance and electric insulation resistance.

## Summary of the Invention

By the present invention glass-filled poly(aromatic sulfide/sulfone) resin compositions are provided which upon being molded result in products having improved mechanical properties. Methods of preparing the compositions, methods of producing molded products from the compositions and the molded products so produced are also provided.

The compositions of the present invention are comprised of aromatic sulfide/sulfone polymer resin, glass reinforcement material and an epoxysilane. In general, the aromatic sulfide/sulfone polymer, either alone or in admixture with arylene sulfide polymer, is present in the composition in an amount in the range of from about 45% to about 95% by weight, the glass reinforcement material is present in an amount in the range of from about 5% to about 55% by weight, and the epoxysilane is present in an amount in the range of from about 0.1% to about 2.5% by weight. Particularly preferred components of the composition are poly(phenylene sulfide/sulfone), alone or in admixture with poly(phenylene sulfide), and 3-glycidoxypropyltrimethoxysilane. The compositions can also include mineral fillers such as talc or calcium sulfate and other additives, pigments, processing aids and the like.

It is, therefore, a general object of the present invention to provide improved glass-filled aromatic sulfide/sulfone polymer compositions and methods.

A further object of the present invention is the provision of glass-filled poly(aromatic sulfide/sulfone) resin compositions which when molded result in products having improved mechanical properties, particularly, improved strength, impact resistance and electric insulation resistance.

Other objects, features and advantages of the present invention will be readily apparent to those skilled in the art upon a reading of the description of preferred embodiments which follows.

## Description of Preferred Embodiments

Molded products produced in accordance with the methods of the present invention using the molding compositions of the invention have significant increases in mechanical properties such as strength, elongation, impact resistance and electric insulation resistance. While the molded products can be used in a variety of applications, they are particularly suitable as electrical and electronic parts, electric wire insulation, and the like.

The compositions of the invention are comprised of thermoplastic resins selected from the group consisting of aromatic sulfide/sulfone polymers and a mixture of aromatic sulfide/sulfone polymers with arylene sulfide polymers, glass reinforcement material and an epoxysilane. In addition, the compositions can, and generally do, contain a mineral filler such as talc or calcium sulfate. The compositions can additionally contain, as desired, other reinforcing materials, plasticizers, pigments, etc.

The terms "aromatic sulfide/sulfone polymer" and "poly(aromatic sulfide/sulfone) resin" are used herein to broadly designate the aromatic sulfide/sulfone polymers described in U.S. Patent No. 4,016,145 issued April 5, 1977 and U.S. Patent No. 4,127,713 issued Nov. 28, 1978, which patents are incorporated herein by reference. The aromatic sulfide/sulfone polymers of increased molecular weight produced in accordance with the process of U.S. Patent No. 4,127,713 are preferred. Such polymers are produced by contacting at least one dihalo aromatic sulfone, at least one alkali metal sulfide, at least one organic amide, at least one sodium carboxylate, and a sufficient amount of water to produce higher molecular weight polymers than are normally produced. A preferred such aromatic sulfide/sulfone polymer is poly(phenylene sulfide/sulfone). Particularly preferred commercially available poly(phenylene sulfide/sulfone) resins are those manufactured by Phillips Petroleum Company of Bartlesville, Oklahoma and marketed as RYTON®S poly(phenylene sulfide/sulfone) resins having melt flows of from about 10 to about 350 grams per 10 minutes as determined by ASTM D1238, condition 343/5.

The terms "arylene sulfide polymer" and "poly(arylene sulfide) resin" are used herein to broadly designate arylene sulfide polymers whether homopolymers, copolymers, terpolymers, and the like, or a blend of such polymers. Poly(arylene sulfide) resins which are suitable for use in accordance with the present invention are those described in United States Patents Nos. 3,354,129 issued Nov. 21, 1967; 3,919,177 issued Nov. 11, 1975; 4,038,261 issued July 26, 1977; and 4,656,231 issued April 7, 1987, which patents are incorporated herein by reference. Of the various poly(arylene sulfide) resins which can be utilized, poly(phenylene sulfide) resins are most preferred. Particularly preferred commercially available poly(phenylene sulfide) resins are those manufactured by Phillips Petroleum Company and marketed as RYTON® poly(phenylene sulfide) resins having melt flows of from about 10 to about 1000 grams per 10 minutes as determined by ASTM D1238, condition 317/5.

The compositions of the present invention can include poly(aromatic sulfide/sulfone) resin alone or a resin comprised of a mixture of poly(aromatic sulfide/sulfone) and poly(arylene sulfide) can be used. When a resin mixture is used, e.g., a mixture of poly(phenylene sulfide/sulfone) and poly(phenylene sulfide), the weight ratio of poly(aromatic sulfide/sulfone) to poly(arylene sulfide) can vary from about 1:40 to about 40:1. Generally, the poly(aromatic sulfide/sulfone) resin when used alone, or the resin mixture of poly(aromatic sulfide/sulfone) and poly(arylene sulfide), is utilized in a composition of this invention in an amount in the range of from about 45% to about 95% by weight. The terms "% by weight" or "weight %" are used herein to mean the weight percent of a particular component in a composition based on the total weight of all of the components in the composition.

The glass reinforcement material utilized can be selected from the group consisting of glass fibers, glass particles and hollow microspheric glass. The preferred glass reinforcement material is glass fibers. While there are a variety of glass fiber reinforcing materials avail able, those specifically developed for thermoplastic reinforcement applications are the most preferred. One such glass fiber reinforcement material is produced by Owens-Corning Corporation of Toledo, Ohio and marketed under the trade designation K-filament, Type 497 glass fibers. Other glass fibers which are suitable are those marketed and designated G-filament by Owens-Corning Corporation, and those manufactured by PPG Industries, Inc. of Pittsburgh, Pennsylvania, and marketed under the trade designation PPG 3090, K-filament. The glass reinforcement material used is generally included in a composition of this invention in an amount in the range of from about 5% to about 55% by weight.

Suitable epoxysilanes for use in accordance with the present invention are represented by the formula

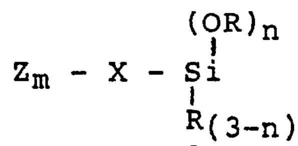

wherein Z is 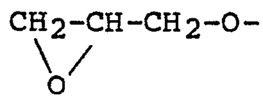 or 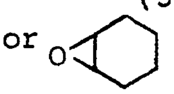

X is a linear or branched alkylene, arylene or aralkylene hydrocarbon radical having from 1 to about 15 carbon atoms,
R is a hydrocarbon radical having from 1 to about 8 carbon atoms,
m is an integer of at least 1, and
n is an integer of 1 to 3.

Examples of such epoxy silanes are 3-glycidoxypropyltrimethoxysilane, beta-(3,4-epoxycyclohexyl)-ethyltrimethoxysilane, 3-glycidoxypropylmethyldiethoxysilane, and 2-glycidoxypropyltrimethoxysilane. The preferred epoxy silane is 3-glycidoxypropyltrimethoxysilane which is available from Union Carbide Corporation under the trade designation UCARSIL™ TC-100 organosilicon chemical. Generally, the epoxysilane utilized is included in the composition of the present invention in an amount in the range of from about 0.1% to about 2.5% by weight.

A preferred composition of the present invention is comprised of a thermoplastic resin selected from the group con sisting of poly(aromatic sulfide/sulfone) resin and a mixture of poly(aromatic sulfide/sulfone) resin and poly(arylene sulfide) resin present in the composition in an amount in the range of from about 50% to about 90% by weight, glass reinforcement material present in an amount of from about 10% to about 50% by weight, and an epoxy silane selected from the group consisting of 3-glycidoxypropyltrimethoxysilane, beta-(3,4epoxycyclohexyl)-ethyltrimethoxysilane, 3-glycidoxypropylmethyldiethoxysilane and 2-glycidoxypropyltrimethoxysilane present in an amount in the range of from about 0.3% to about 1.8% by weight.

A particularly preferred composition of this invention is poly(phenylene sulfide/sulfone) resin present in the composition in an amount in the range of from about 55% to about 80%, glass fiber reinforcement material present in an amount in the range of from about 15% to about 40% by weight, and 3-glycidoxypropyltrimethoxysilane present in an amount in the range of from about 0.4% to about 1.4% by weight.

The glass-filled thermoplastic resin compositions of this invention can also contain one or more mineral fillers depending upon the particular use requirements involved. Suitable mineral fillers are those selected from the group consisting of talc, silica, clay, alumina, calcium sulfate, calcium carbonate, mica and mixtures thereof. The fillers can be in the form of, for example, powder, grain or fiber. The most preferred mineral filler is selected from the group consisting of calcium sulfate and talc. When a mineral filler is used in a composition of the present invention it is included therein in an amount in the range of from about 1% to about 50% by weight, more preferably from about 5% to about 40% by weight.

A particularly preferred composition of this invention including a mineral filler is comprised of poly-(phenylene sulfide/sulfone) resin present in the composition in an amount of from about 55% to about 70% by weight, glass fiber reinforcement material present in an amount of from about 10% to about 30% by weight, 3-glycidoxypropyltrimethoxy silane present in an amount in the range of from about 0.4% to about 1.4% by weight, and a mineral filler selected from the group consisting of calcium sulfate and talc present in an amount in the range of from about 10% to about 35% by weight.

As mentioned above, the compositions can include other additives including, but not limited to, pigments such as carbon black, mold corrosion inhibitors such as hydrotalcite, e.g., the hydrotalcite sold by Kyowa Chemical Company, Ltd. of Osaka, Japan under the trade designation DHT-4A, and processing aids such as high density polyethylene.

The molding compositions of this invention which upon being molded result in products having improved mechanical properties are prepared by mixing a thermoplastic resin selected from the group consisting of poly(aromatic sulfide/sulfone) resin and a mixture of poly(aromatic sulfide/sulfone) resin with poly(arylene sulfide) resin, glass reinforcement material and an epoxysilane. Many suitable methods of mixing the components are well known to those skilled in the art. By way of example, the components of the composition can be mixed together at room temperature in a rotating drum blender, or in an intensive mixer such as a Henschel mixer, to form a homogeneous mixture of the components. Alternatively, the epoxysilane can be premixed with the glass reinforcement material and filler, if used, before the addition of

the thermoplastic resin and any other components. The resin and other components are then added to form a homogeneous mixture. The homogeneous mixture of components can be extrusion compounded at a temperature above the melting point of the resin to produce a uniform composition. The extrudate can be in the form of strands, sheets or tapes.

In producing molded products having improved mechanical properties, i.e., strength, elongation, impact resistance, electric insulation resistance, etc., a molding composition of the present invention is prepared as described above. The composition is then injection molded in a known manner to form desired products therefrom.

The following examples are presented to further illustrate the compositions and methods of this invention. The particular species and conditions employed in the examples are intended to be illustrative of the invention and not limiting thereto.

## Example 1

A mixture of 74.7% by weight of poly(phenylene sulfide/sulfone) resin (Phillips Petroleum Company RYTON® 565) having a melt flow of about 65 grams per 10 minutes measured in accordance with ASTM D1238, condition 343/5); 25% by weight glass fibers (K-filament, Type 497 sold by Owens-Corning Fiberglas Corporation); and 0.3% by weight zinc oxide pigment were dry blended and extruded through a Davis-Standard extruder, 1.5 inch diameter and 24:1 L:D ratio at a temperature in the range of from about 600° F to about 650° F. A metering screw with 3:1 compression ratio was used at 60-90 rpm. The melt was extruded through a strand die and chopped into coarse granules. The granules were heated in a forced air oven at 400° F for 2 hours just before molding. The granules were then molded into test specimen bars using an Arburg 221E/170R injection molding machine. The mold temperature was about 275° F and the barrel temperature was 620° F to 660° F. Flexural strength was measured by ASTM D790, tensile strength and elongation by ASTM D638, impact resistance (Izod) by ASTM D256, hydrolytic stability by ASTM D638 after conditioning for 150 hours at 250° F in 15 psi water, and electric insulation resistance by ASTM 257. The results of the tests on the specimen bars produced from the above-described composition are given in Table I, Run 1 set forth below. For Run 2, a second composition was prepared, the components of which were the same as those in the Run 1 composition except that 74.1% by weight poly(phenylene sulfide/sulfone) was used and 0.6% by weight of 3-glycidoxypropyltrimethoxysilane was included in the composition. The molding compositions used in Runs 1 and 2, and the results of the tests for mechanical properties made on molded test specimen bars produced therefrom are shown in Table I below.

TABLE I

| EFFECT OF EPOXYSILANE ON MECHANICAL PROPERTIES | | |
|---|---|---|
| RUN | 1 | 2 |
| COMPOSITION | | |
| Component, Weight % | | |
| Poly(phenylene sulfide/sulfone) | 74.7 | 74.1 |
| Glass fibers | 25.0 | 25.0 |
| Zinc oxide | 0.3 | 0.3 |
| 3-glycidoxypropyltrimethoxysilane | -- | 0.6 |
| MECHANICAL PROPERTIES | | |
| Flexural modulus, msi | 1.1 | 1.1 |
| Flexural strength, ksi | 22.2 | 22.7 |
| Tensile strength, ksi | | |
| room temperature | 15.1 | 16.2 |
| 150 °C | 11.3 | 11.3 |
| Elongation, % | | |
| room temperature | 3.9 | 4.1 |
| 150 °C | 3.2 | 3.1 |
| Impact resistance, ft-lb/in | | |
| notched Izod | 1.2 | 1.3 |
| unnotched Izod | 6.2 | 6.2 |
| Hydrolytic stability | | |
| aged tensile, ksi | 11.9 | 14.0 |
| retained, % | 79 | 86 |
| Insulation resistance, ohms | $2x10^9$ | $3x10^{13}$ |

From Table I it can be seen that the addition of an epoxysilane to the poly(phenylene sulfide/sulfone) resin composition improved the mechanical properties of the composition after molding, and particularly improved the electric insulation resistance and hydrolytic stability.

## Example 2

The preparation of molding compositions and the testing of molded specimen bars as described in Example 1 were repeated except that three runs were made. The composition of the first run was comprised of poly(phenylene sulfide) resin (Phillips Petroleum Co. RYTON® having a melt flow of about 78 grams per 10 minutes determined by ASTM 1238), glass fibers (O-C K-filament, Type 497), hydrotalcite mold corrosion inhibitor (Kyowa Chemical Industries Company of Osaka, Japan, Type DHT4A), and polyethylene (Phillips Petroleum Co. High Density Type BX605). The composition of the second run substituted a thermoplastic resin comprised of a mixture of poly(phenylene sulfide/sulfone) and poly-(phenylene sulfide) for the poly(phenylene sulfide) resin used in the first run. The composition used in the second run was comprised of 14.6% by weight poly(phenylene sulfide/sulfone) and 44.15% by weight poly-(phenylene sulfide), with the other components in the composition being the same as those used in the composition of the first run. The composition of the third run was the same as the composition of the second run except that 0.6% by weight of 3-glycidoxypropyltrimethoxysilane was included therein and 14.0% by weight poly(phenylene sulfide/sulfone) was used. The various compositions and the results of tests for mechanical properties made on molded test specimen bars produced therefrom are shown in Table II below.

TABLE II

| EFFECT OF EPOXYSILANE ON MECHANICAL PROPERTIES | | | |
|---|---|---|---|
| RUN | 1 | 2 | 3 |
| COMPOSITION | | | |
| Component, Weight % | | | |
| Poly(phenylene sulfide/sulfone) | --- | 14.6 | 14.0 |
| Poly(phenylene sulfide) | 58.75 | 44.15 | 44.15 |
| Glass fibers | 40.0 | 40.0 | 40.0 |
| Hydrotalcite | 1.0 | 1.0 | 1.0 |
| Polyethylene | 0.25 | 0.25 | 0.25 |
| 3-glycidoxypropyltrimethoxysilane | -- | -- | 0.6 |
| MECHANICAL PROPERTIES | | | |
| Flexural modulus, msi | 1.9 | 2.1 | 2.1 |
| Flexural strength, ksi | 22.7 | 26.0 | 26.5 |
| Tensile strength, ksi | 16.4 | 17.9 | 18.5 |
| Elongation, % | 2.4 | 2.5 | 2.5 |
| Impact resistance, ft-lb/in | | | |
| notched Izod | 1.8 | 1.7 | 2.1 |
| unnotched Izod | 4.5 | 3.9 | 5.2 |
| Insulation resistance, ohms | $2x10^7$ | $1x10^9$ | $1x10^{10}$ |

From Table II it can be seen that the presence of an epoxysilane in the composition of Run 3 brought about a significant improvement in mechanical properties.

The present invention, therefore, is well adapted to carry out the objects and attain the ends and advantages mentioned as well as those inherent therein. While substitutions for the components and changes in the steps of the invention may be made by those skilled in the art, such substitutions and changes are encompassed within the scope of the invention as defined by the appended claims.

## Claims

1. A composition comprising a thermoplastic resin selected from the group consisting of poly(aromatic sulfide/sulfone) resin and a mixture of poly(aromatic sulfide/sulfone) resin and poly(arylene sulfide) resin, glass reinforcement material and an epoxysilane.

2. The composition of claim 1 wherein said thermoplastic resin is present in said composition in an amount in the range of from about 45% to about 95% by weight, said glass reinforcement material is present in an amount in the range of from about 5% to about 55% by weight, and said epoxysilane is present in an amount in the range of from about 0.1% to about 2.5% by weight.

3. The composition of claim 1 or 2 wherein said thermoplastic resin is comprised of poly(phenylene sulfide/sulfone) resin.

4. The composition of claim 1 or 2 wherein said thermoplastic resin is comprised of a mixture of poly-(phenylene sulfide/sulfone) resin and poly(arylene sulfide) resin.

5. The composition of claim 2 wherein said epoxysilane is represented by the formula

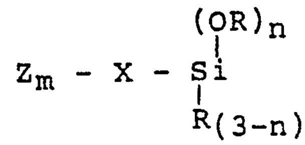

wherein

Z is 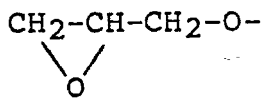 or 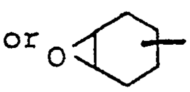

X is a linear or branched alkylene, arylene or aralkylene hydrocarbon radical having from 1 to about 15 carbon atoms,

R is a hydrocarbon radical having from 1 to about 8 carbon atoms,

m is an integer of at least 1, and

n is an integer of 1 to 3.

6. The composition of one of claims 1-5 wherein said epoxysilane is selected from the group consisting of 3-glycidoxypropyltrimethoxysilane, beta-(3,4-epoxycyclohexyl)-ethyltrimethoxysilane, 3-glycidoxypropylmethyldiethoxysilane and 2-glycidoxypropyltrimethoxysilane.

7. The composition of one of claims 1-6 wherein said thermoplastic resin is a mixture of poly(phenylene sulfide/sulfone) resin and poly(phenylene sulfide) resin present in a weight ratio, respectively, in the range of from about 1:40 to about 40:1, and said mixture is present in said composition in an amount in the range of from about 55% to about 80% by weight.

8. The composition of one of claims 1-7 wherein said epoxysilane is 3-glycidoxypropyltrimethoxysilane and is present in said composition in an amount in the range of from about 0.4% to about 1.4% by weight.

9. The composition of one of claims 1-8 which is further characterized to include a mineral filler present therein, in particular wherein said mineral filler is selected from the group consisting of talc, silica, clay, alumina, calcium sulfate, calcium carbonate, mica and mixtures thereof.

10. The composition of claim 9 wherein said thermoplastic resin is present in said composition in an amount of from about 45% to about 85% by weight, said glass reinforcement material is present in an amount of from about 5% to about 50% by weight, said epoxysilane is present in an amount in the range of from about 0.1% tc about 2.5% by weight, and said mineral filler is present in an amount in the range of from about 1% to about 50% by weight.

11. The composition of one of claims 1 to 10 comprising

a) 45 to 95 parts by weight of said thermoplastic resin,

b) 5 to 55 parts by weight of said glass reinforcement material, and

c) 0.1 to 2.5 parts by weight of said epoxysilane,

a) and b) together being 100 parts by weight.

12. The composition of one of claims 1 to 11 comprising

a) 45 to 85 parts by weight of said thermoplastic resin,

b) 5 to 50 parts by weight of said glass reinforcement material,

c) 1 to 50 parts by weight of said mineral filler, and

d) 0.1 to 2.5 parts by weight of said epoxysilane,

wherein a), b) and c) together are 100 parts by weight.

13. A method of preparing a molding composition which upon being molded results in a product having improved mechanical properties comprising mixing a thermoplastic resin, glass reinforcement material and an epoxysilane, each as defined in one of the composition claims, to form a homogeneous mixture thereof.

14. A method of producing a molded product having improved mechanical properties comprising the steps of:

mixing a thermoplastic resin, glass reinforcement material and an epoxysilane each as defined in one of the composition claims, to form a homogenous mixture thereof; and

forming an injection product using said mixture.

15. A molded product produced in accordance with the method of claim 14.

European Patent Office

# EUROPEAN SEARCH REPORT

Application Number

EP 90 10 5539

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 275 991 (DAINIPPON INK AND CHEMICALS, INC.)<br>* Claims *<br>--- | 1-15 | C 08 K 13/02<br>C 08 L 81/06 //<br>(C 08 K 13/02<br>C 08 K 3:40<br>C 08 K 5:54 ) |
| A | US-A-4 365 037 (TUNEYUKI ADACHI et al.)<br>* Claims *<br>--- | 1 | |
| A | EP-A-0 302 648 (POLYPLASTICS CO., LTD)<br>* Claims *<br>--- | 1 | |
| A | US-A-4 703 074 (HITOSHI IZUTSU et al.)<br>* Claims; column 2, lines 9-40 *<br>----- | 1 | |
| | | | TECHNICAL FIELDS SEARCHED (Int. Cl.5) |
| | | | C 08 K<br>C 08 L |

The present search report has been drawn up for all claims

| Place of search | Date of completion of the search | Examiner |
|---|---|---|
| THE HAGUE | 02-07-1990 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)